# EUROPEAN PATENT APPLICATION

(11) **EP 1 657 462 A1**
(43) Date of publication of application: **17.05.2006**
(21) Application number: 05024906.9
(22) Date of filing: 15.11.2005
(51) Int. Cl.: F16D 13/64

(54) **Clutch facing**

(30) Priority: 15.11.2004 JP 2004330747
(71) Applicant: AISIN KAKO KABUSHIKI KAISHA, Toyota-shi Aichi-ken 470-0492 (JP)
(72) Inventor: Katsukawa, Masahiro, Komaki-shi Aichi-ken 485-0068 (JP)
(74) Representative: TBK-Patent

(57) **Abstract**

A clutch facing (10) has cut portions (11) or flat smooth surfaces at locations that get in planar contact with a cushion plate (3) when fixed thereto. An anti-elastic (reinforcing) portion (12) is provided between the flat smooth surfaces so as to lessen an elastic deformation in an elasticity direction that may be given from the cushion plate (3). The anti-elastic portion (12) has a reinforcing part (21) of a given width from an outer circumferential edge to an inside, a reinforcing part (22) of a given width from an inner circumferential edge to an outside and one or more reinforcing part (23) of a given width provided between them so as to extend in a circumferential direction. The clutch facing (10) makes a thickness of the reinforcing parts the same as the flat smooth surfaces, while making the other portion thinner except the reinforcing parts (21 to 23).

## Description

### BACKGROUND OF THE INVENTION

### FIELD OF THE INVENTION

This invention relates to a dry clutch facing, for example, a clutch facing of a clutch used in a vehicle such as an automobile, and particularly to a clutch facing used for a clutch disc which is disposed between a facing rotator and a pressure plate so as to transmit a torque between the facing rotator and the pressure plate according to a pressure of each of the facing rotator and the pressure plate.

### DESCRIPTION OF THE RELATED ART

A conventional clutch facing is described in Japanese Laid Open Patent Publication No. 2001-012498.

The clutch facing described in Japanese Laid Open Patent Publication No. 2001-012498 is composed of a facing material and a reinforcing material. The facing material is made of a continuous textile material spirally wound, a rubber impregnating the continuous textile material, a thermosetting resin and a friction improving agent. The reinforcing material has a matrix made of a thermosetting resin and a reinforcing short fibers dispersed uniformly and at random in the matrix. The reinforcing material is joined to a back surface of the facing material so as to contact with a cushion spring.

The reinforcing material of the technique described in Japanese Laid Open Patent Publication No. 2001-012498 hardly produces distortion. Therefore, if distortion is generated on the facing material, such distortion is greatly restrained by a lining effect of the reinforcing material. Moreover, the cushion spring contacts with the reinforcing material of each clutch facing incorporated in a disc including a separate cushion structure. Then, if there arises a frictional slide between the cushion spring and each of the clutch facings under a severe operating condition, a wear of each clutch facing is restrained.

A technique of Japanese Laid Open Patent Publication No. 2000-037797 is also well-known as a manufacturing method of a clutch facing. The technique of Japanese Laid Open Patent Publication No. 2000-037797 has a resin impregnating step for impregnating a fiber bundle (glass roving) bundling long fibers as a substrate with a liquid impregnant containing a thermosetting resin so as to form a resin impregnated strand and a rubber bonding step for making a compounded rubber bonded to the resin impregnated strand. A medium or solvent of the liquid impregnant is water. The thermosetting resin is a water-based melamine-modified phenolic resin that has a melamine at a mixing ratio of 30% or more to 80% or less.

According to the technique of this Japanese Laid Open Patent Publication No. 2000-037797, a raw material for the friction material which a performance of a end-product friction material such as a clutch facing is not fall can be manufactured even if it does not use an organic medium with the impregnating and attaching process.

However, the clutch facing of Japanese Laid Open Patent Publication No. 2001-012498 is composed of an annular facing material and an annular reinforcement joined to a back surface of the annular facing material. Moreover, the annular facing material includes a roving as a continuous textile material wound in a spiral configuration, a rubber impregnated in the roving, a thermosetting resin and a friction improving agent. The reinforcement includes a matrix made of a thermosetting resin and reinforcing short fibers dispersed uniformly and at random in the matrix. The facing material and the reinforcement are formed by pressing into an entire shape of the clutch facing. Opposite surfaces of the clutch facing are cut so as to be flat smooth surfaces.

Of course, the clutch facing of Japanese Laid Open Patent Publication No. 2000-037797 is manufactured in the same way.

In addition, the reinforcement of the technique described in Japanese Laid Open Patent Publication No. 2001-012498 greatly restrains distortions by its lining effect. However, Japanese Laid Open Patent Publication No. 2001-012498 discloses nothing more than a technique for making a thickness of the clutch facing uniform.

For the above reason, what happens is that a material used for shaping a molded article that is formed by pressing is cut and the cut material is scrapped and discarded. Consequently, there is a waste of material in manufacture of the clutch facing.

Moreover, since the molded article made by pressure forming is cut into a given size by a cutting work, it spends too much time in the cutting work and productivity is not good.

### BRIEF SUMMARY OF THE INVENTION

An object of the present invention is to provide a clutch facing that enables a mechanical strength to be maintained, that eliminates a waste of material and that makes it possible to save labor in a cutting work.

According to an invention, there is provided a clutch facing of a flat ring plate shape fixed to a cushion plate of a clutch disc. A plurality of flat smooth surfaces is formed on a portion provided on one surface in a thickness direction of the clutch facing (10, 110, 210, 310). The flat smooth surfaces get in planar contact with the cushion plate (3) when the clutch facing (10, 110, 210, 310) is fixed to the cushion plate (3). An anti-elastic structure is provided between adjacent ones of the flat smooth surfaces so as to lessen a curving deformation of the clutch facing (10, 110, 210, 310) against a force in an elasticity direction given from the cushion plate (3).

The anti-elastic structure may include: a first reinforcing part (21) provided from an outer circumferential edge toward an inside of the clutch facing (10) into a predetermined width (A) so as to extend in a circumferential direction of the clutch facing (10); a second reinforcing part (22) provided from an inner circumferential edge toward an outside of the clutch facing (10) into a predetermined width (B) so as to extend in the circumferential direction of the clutch facing (10); and one or more third reinforcing part (23) of a predetermined width (C) provided at a middle between the first reinforcing part (21) and the second reinforcing part (22) so as to extend in the circumferential direction of the clutch facing (10). A thickness of the first reinforcing part (21), a thickness of the second reinforcing part (22) and a thickness of the third reinforcing part (23) are made into a same thickness as the flat smooth surfaces, while a thickness of a portion except the first reinforcing part (21), the second reinforcing part (22) and the third reinforcing part (23) is made thinner than the thickness of the first reinforcing part (21), the second reinforcing part (22) and the third reinforcing part (23).

The anti-elastic structure may include: a first reinforcing part (121) provided from an outer circumferential edge toward an inside of the clutch facing (110) into a predetermined width so as to extend in a circumferential direction of the clutch facing (110); a second reinforcing part (122) provided from an inner circumferential edge toward an outside of the clutch facing (110) into a predetermined width so as to extend in the circumferential direction of the clutch facing (110); and one or more third reinforcing part (124, 125, 126, 127, 128) of a predetermined width (G) provided at a middle between the first reinforcing part (121) and the second reinforcing part (122) so as to extend in a diagonal direction of the clutch facing (110). A thickness of the first reinforcing part (121), a thickness of the second reinforcing part (122) and a thickness of the third reinforcing part (124 to 128) are made into a same thickness as the flat smooth surfaces, while a thickness of a portion except the first reinforcing part (121), the second reinforcing part (122) and the third reinforcing part (124, 125, 126, 127, 128) is made thinner than the thickness of the first reinforcing part (121), the second reinforcing part (122) and the third reinforcing part (124, 125, 126, 127, 128).

The anti-elastic structure may be composed of a protruded part (21, 22, 23, 121, 122, 124, 125, 126, 127, 128, 229, 330) formed between a plurality of dents (24, 124, 224, 324) disposed on the anti-elastic structure. A thickness of the protruded part (21, 22, 23, 121, 122, 124, 125, 126, 127, 128, 229, 330) is made a same thickness as a thickness of the flat smooth surfaces, while the dents (24, 124, 224, 324) being formed thinner than the protruded part (21, 22, 23, 121, 122, 124, 125, 126, 127, 128, 229, 330).

The anti-elastic structure may include a reinforcing part (229) composed of a mesh surface with protrusions of a fixed width formed into a lattice shape. The reinforcing part (229) has dents (224) of a rectangular plan shape between the protrusions. The reinforcing part (229) makes a thickness of the protrusions a same thickness as the flat smooth surfaces, while making a thickness of the dents (224) thinner than the protrusions.

The anti-elastic structure may be composed of a protruded part (330) formed between a plurality of dents (324) disposed on the anti-elastic structure. The dent (324) has a curved shape or a polygonal shape so that the protruded part (330) has a plan shape corresponding to an outline of the dent (324). A thickness of the protruded part (330) is made a same thickness as a thickness of the flat smooth surfaces, while the dents (324) being formed thinner than the protruded part (330).

The flat smooth surface of the clutch facing (10, 110, 210, 310) may be composed of a plurality of cut portions (11, 111, 211, 311) that are respectively formed by cutting entirely from the outer circumferential edge to the inner circumferential edge of the clutch facing (10, 110, 210, 310) so as to extend in a tangential direction of a clutch shaft or a clutch hub (1) attached to the clutch shaft so as to move in an axial direction when the clutch disc is assembled to the clutch shaft.

The anti-elastic structure may be composed of an anti-elastic portion (12, 112, 212, 312) formed between facing edges of adjacent ones of the cut portions (11, 111, 211, 311), and the anti-elastic portion (12, 112, 212, 312) has a plan shape of a deformed sector corresponding to a plan shape of the cut portion (11, 111, 211, 311).

The anti-elastic portion (11, 111, 211, 311) may be made by disposing dents (24, 124, 224, 324) between protruded portions (21, 22, 23, 121, 122, 124, 125, 126, 127, 128, 229, 330).

The protruded portions (21, 22, 23, 121, 122, 124, 125, 126, 127, 128, 229, 330) of then anti-elastic portion (12, 112, 212, 312) may be cut simultaneously at a time of cutting the cut portions (11, 111, 211, 311) so as to be a same thickness as the cut portions (11, 111, 211, 311).

The protruded portions (21, 22, 23, 121, 122, 124, 125, 126, 127, 128, 229, 330) of the anti-elastic portion (12, 112, 212, 312) may keep a thickness before cutting without being cut at a time of cutting the cut portions (11, 111, 211, 311) so as to be a thickness larger than the cut portions (11, 111, 211, 311).

The anti-elastic portion (12, 112) may have a plurality of protruded portions (21, 22, 23, 121, 122) extending in the circumferential direction of the clutch facing (10, 110) between the cut portions (11, 111) so as to arrange dents (24, 124) between the protruded portions (21, 22, 23, 121, 122).

BRIEF DESCRIPTION OF THE SEVERAL VIEWS OF THE DRAWINGS 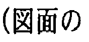 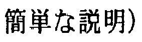

Fig. 1 is an exploded perspective view showing a laid-out constitution of a clutch disc having a clutch facing according to a first embodiment of the invention.
Fig. 2 is an explanatory drawing showing an assembled state of the clutch disc having the clutch facing according to the first embodiment of the invention in an enlarged cross-section.
Fig. 3A is a plan view showing a configuration of the clutch facing after a forming step according to the first embodiment of the invention, while seen from a mounting surface side.
Fig. 3B is a plan view showing a configuration of the clutch facing after the forming step according to the first embodiment of the invention, while seen from an exposed surface side.
Fig. 4A is a plan view showing a configuration of the clutch facing after a cutting step according to the first embodiment of the invention, while seen from the mounting surface side.
Fig. 4B is a plan view showing a configuration of the clutch facing after the cutting step according to the first embodiment of the invention, while seen from the exposed surface side.
Fig. 5 is a sectional view showing a thickness of each part of an anti-elastic portion having an anti-elastic structure after the forming step and the cutting step according to the first embodiment of the invention.
Fig. 6 is a plan view showing a configuration of the clutch facing after a cutting step according to a second embodiment of the invention, while seen from a mounting surface side.
Fig. 7 is a plan view showing a configuration of the clutch facing after a cutting step according to a third embodiment of the invention, while seen from a mounting surface side.
Fig. 8 is plan view showing a configuration of the clutch facing after a cutting step according to a fourth embodiment of the invention, while seen from a mounting surface side.

### DETAILED DESCRIPTION OF THE INVENTION

Preferred embodiments of the invention are described hereafter referring to the drawings. Same reference numerals or characters are annexed to same elements throughout the embodiments thereby eliminating redundant explanation.

### FIRST EMBODIMENT

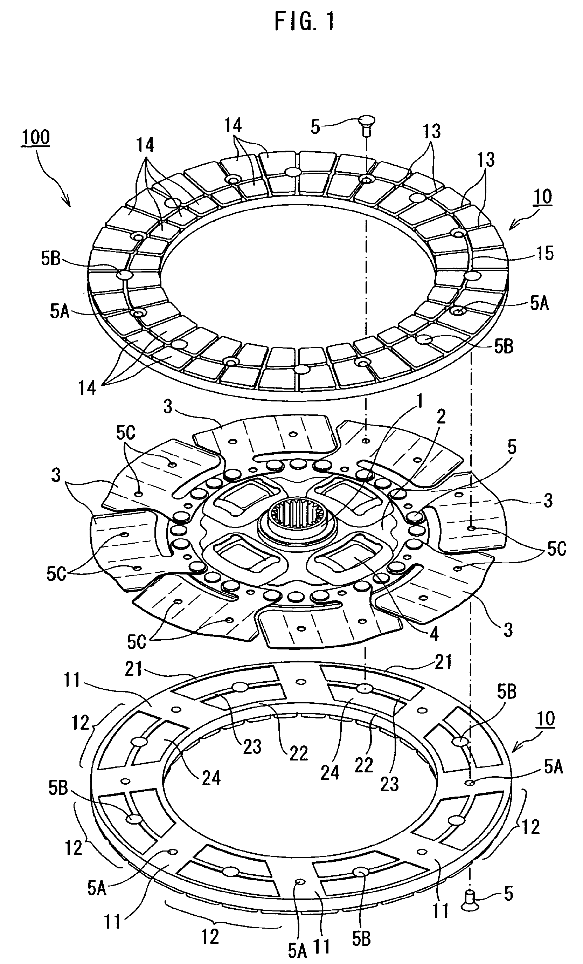

A first embodiment is described referring to Fig. 1 to Fig. 5.

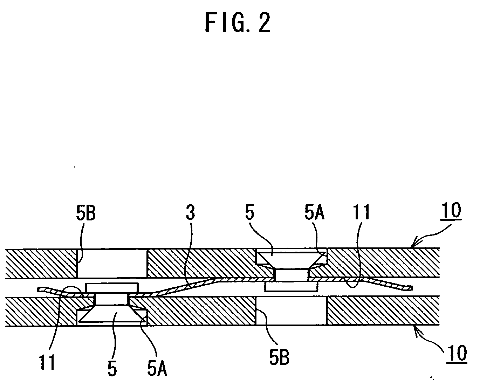

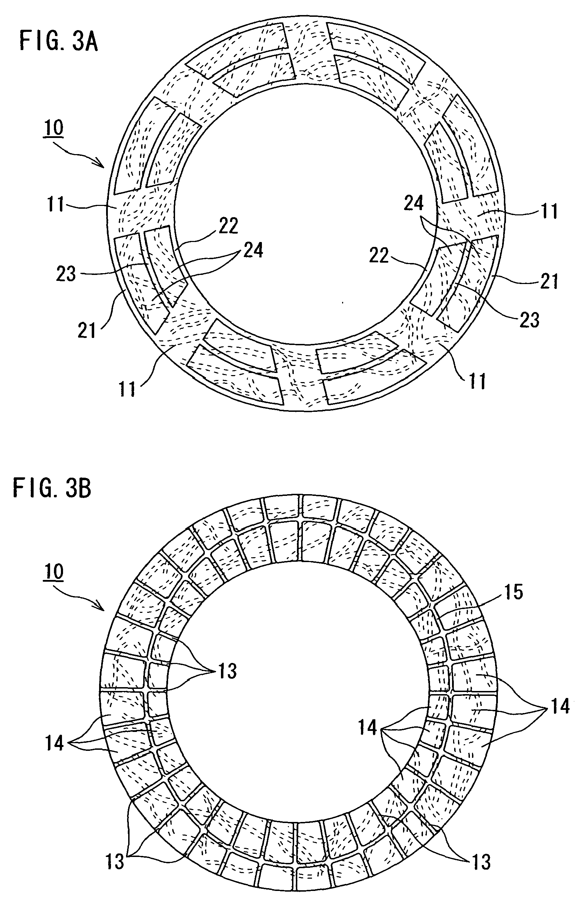

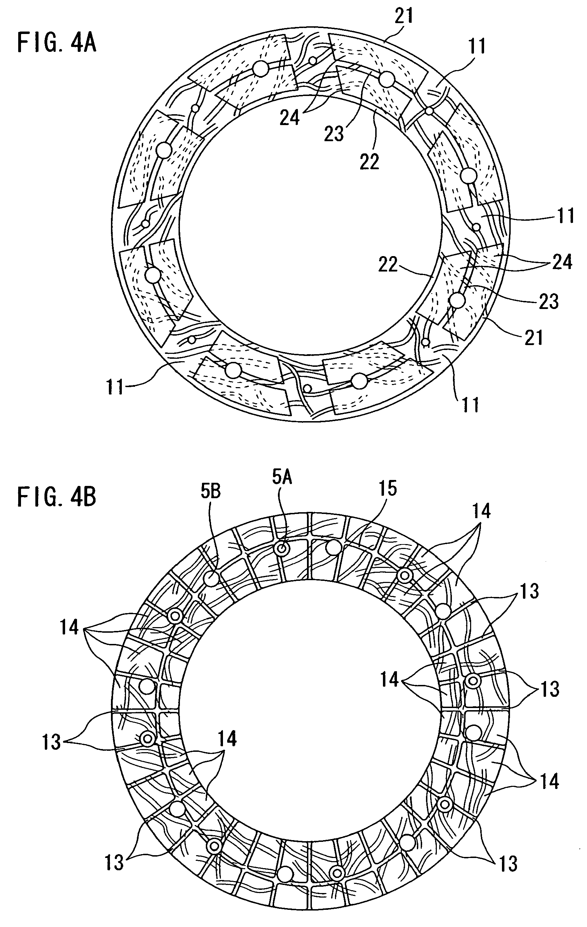

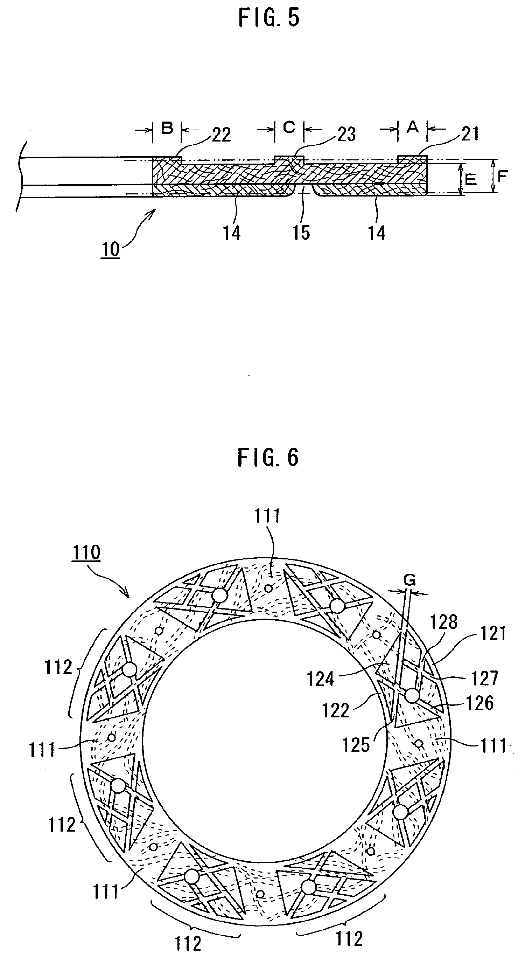

Fig. 1 is an exploded perspective view showing a laid-out constitution of a clutch disc having a clutch facing according to a first embodiment of the invention. Fig. 2 is an explanatory drawing showing an assembled state of the clutch disc having the clutch facing according to the first embodiment of the invention in an enlarged cross-section. Fig. 3A is a plan view showing a configuration of the clutch facing after a forming step according to the first embodiment of the invention, while seen from a mounting surface side. Fig. 3B is a plan view showing a configuration of the clutch facing after the forming step according to the first embodiment of the invention, while seen from an exposed surface side. Fig. 4A is a plan view showing a configuration of the clutch facing after a cutting step according to the first embodiment of the invention, while seen from the mounting surface side. Fig. 4B is a plan view showing a configuration of the clutch facing after the cutting step according to the first embodiment of the invention, while seen from the exposed surface side. Fig. 5 is a sectional view showing a thickness of each part of an anti-elastic portion having an anti-elastic structure after the forming step and the cutting step according to the first embodiment of the invention.

A clutch disc 100 generally has an overall structure as shown in Fig. 1 to Fig. 5. That is, the clutch disc 100 is composed of a clutch hub 1, a circular disc 2, a cushion plate 3 and a clutch facing 10. The clutch hub 1 enables an axial movement of a clutch shaft not shown. The circular disc 2 is arranged around the clutch hub 1. The cushion plate 3 is disposed around the circular disc 2 so as to give elasticity between a pressure plate and a facing rotator not shown. The clutch facing 10 is fixed on the cushion plate 3.

The clutch hub 1 is coupled with the circular disc 2 with a coil spring 4. The circular disc 2 is directly fixed to the cushion plate 3 with a rivet 5. Specifically, the rivet 5 is fixed between a rivet hole 5A of the clutch facing 10 and a mounting hole 5C of the cushion plate 3 so as to fixedly join the clutch facing 10 at an the upper side in Fig. 1 and Fig. 2 and the corresponding cushion plate 3 with each other. A through-hole 5B is a hole for holding the rivet 5 that is provided at a position facing an opposite clutch facing 10 in each of the clutch facings 10. While the rivet hole 5A of the clutch facing 10 is a stepped or shoulder hole. As shown in Fig. 2, the rivet 5 is inserted into the rivet hole 5A of one of the clutch facings 10. Then, a head of the rivet 5 is touched with a stepped surface or shoulder of the rivet hole 5A, while a shaft of the rivet 5 is inserted into the corresponding mounting hole 5C of the cushion plate 3. Thus, the through-hole 5 B of the other clutch facing 10 is placed opposite to the shaft of the rivet 5. Consequently, the tip of the shaft of the rivet 5 can be caulked on the cushion plate 3 through the through-hole 5B of the other clutch facing 10.

A manufacturing of the clutch facing 10 carried out by the following steps: a resin impregnating step, a rubber bonding step, a forming step and a cutting step.

First, in the resin impregnating step, a fiber bundle gathering or bundling long fibers as a substrate is impregnated with a liquid impregnant containing a thermosetting resin so as to form a resin impregnated strand. The fiber bundle is typically a glass roving or the like having glass fibers as base fibers. Still, the fiber bundle may be a fiber bundle made of other kind of fibers. Various water-based melamine-modified phenolic resins can be used as the thermosetting resin, such as a water soluble one, a colloidal one, a dispersant one, or the like. Of course, a melamine-modified phenolic resin of a organic solvent type can be used, too. In case a water-based resin such as the water-based melamine-modified phenolic resin or the like is used in the resin impregnating step, it is preferable to give hydrophilic processing to the fiber bundle before the resin impregnating step.

In the rubber bonding step, a compounded rubber composition bonded to the resin impregnated strand. At this moment, a rubber sheet as the compounded rubber composition is bonded to the resin impregnated strand such as the glass roving impregnated with the thermosetting resin. It is possible to select as desired a method for bonding the rubber sheet to the resin impregnated strand depending on characteristics of a friction material to be produced.

A forming step is composed of a first forming step, a second forming step and a third forming step.

First, in the first forming step, the resin impregnated strand with the rubber sheet bonded thereto is wound up in a ring shape or a spiral configuration thereby to be formed into a first ring board-shaped body or a resin-impregnated ring board-shaped body corresponding to the clutch facing 10. Next, the first ring board-shaped body is disposed in a metal mold, pressed therein and heated and pressure-formed under a condition of a temperature of around 150°C to 200°C thereby being made into a second ring board-shaped body or a pressure-formed ring board-shaped body. Then, in the second forming step, the second ring board-shaped body that was heated and pressure-formed is treated with heat for about five hours in an atmosphere of a temperature of around 200 °C to 300 °C. Thus, the thermosetting resin in the second ring board-shaped body is cured or thermosetted, so that the second ring board-shaped body is formed into a hardened ring board-shaped body having a form corresponding to a form of the clutch facing 10 before cutting. Lastly, in the third forming step, the clutch facing 10 formed in the metal mold is taken out of the metal mold. Fig. 3A and Fig. 3B are plan view respectively showing a mounting surface side (Fig. 3A) and an exposed surface side (Fig. 3B) of the clutch facing 10 after the forming in the metal mold.

In embodying the invention, the resin impregnating step, the rubber bonding step, the forming step and the cutting step of the clutch facing 10 are not limited to the above mentioned embodiment. These steps may be carried out in various ways as long as the clutch facing 10 is formed. Of course, when embodying the invention, materials of the clutch facing are not limited to the materials used in the above mentioned embodiment.

A cut portions 11 are formed at the mounting surface side or at an upper surface and a lower surface that are inside opposed surfaces of Fig. 2. The cut portion 11 is planarly touched with the cushion plate 3 so as to extend in a tangential direction or an extension direction of a tangent of the clutch hub 1 or the clutch shaft. Here, the cut portion 11 is not formed to extend in a radial direction toward a center of the clutch hub 1 or the clutch shaft because a surface of the cushion plate 3 is formed so as to extend in the tangential direction of the clutch hub 1. Moreover, it is aimed to prevent the cut portions 11 from interfering with radial grooves 13 mentioned later, since it may cause degradation of a mechanical strength thereof.

That is, the cut portion 11 of the clutch facing 10 is not limited to a cutting shape that extends in the tangential direction of the clutch hub 1 setting cut shape to extend to a tangent line direction of clutch hub 1. A structure of the cut portions 11 of the clutch facing 10 in relation to the radial grooves 13 is not limited to a specific one as long as the cut portion 11 forms a surface planarly contacted with the cushion plate 3And is prevented from interference with the radial grooves 13 described later.

In addition, anti-elastic portions anti-elastic 12 having an anti-elastic structure are formed between the cut portions 11, respectively. As shown in Fig. 5, the anti-elastic portion 12 includes a first reinforcing part 21, a second reinforcing part 22 and a third reinforcing part 23. The first reinforcing part 21 has a predetermined width A from an outer circumference to an inside. The second reinforcing part 22 has a predetermined width B from an inner circumference to an outside. The third reinforcing part 23 has a predetermined width C. One or more third reinforcing parts 23Are provided at a middle part or between the first reinforcing part 21 and the second reinforcing part 22 so as to extend in a circumferential direction. The first to the third reinforcing parts 21, 22, 23 extend in the circumferential direction at an outer peripheral edge, an inner peripheral edge and the middle part therebetween, respectively. The clutch facing 10 has a first and a second dents dent24 formed respectively between the first to the third reinforcing parts 21, 22, 23 so as to extend in the circumferential direction. As shown in Fig. 5, the anti-elastic portion 12 has a same thickness F as a thickness between flat smooth surfaces that are formed on opposite sides of the cut portion 11 by cutting. The anti-elastic portion 12 is formed in the forming step so as to make thinner a thickness E of a portion except protruded portions protruded portion having predetermined widths A, B and C corresponding to the first to the third reinforcing parts 21, 22 and 23, respectively. Specifically, in the forming step, a portion corresponding to the anti-elastic portion 12 before cutting is formed into the thickness E at an area except the protruded portions of the predetermined widths A, B, C or the portions corresponding to the first to the third reinforcing parts 21, 22, 23, that is, at the portion corresponding to the dent 24. Moreover, the protruded portion of the predetermined width A, B, C is formed into the thickness shown in Fig. 5.

Then, in the cutting step, both thickness side surfaces of the part corresponding to the anti-elastic portion 12 are respectively cut by a given thickness so that the anti-elastic portion 12 becomes the same thickness as the cut portion 11 thereby forming the anti-elastic portion 12 of the thickness F. In other words, Fig. 5 shows a state in which the part corresponding to the anti-elastic portion 12 in the forming step has the thickness shown by a solid line, while the thickness of the anti-elastic portion 12 after the cut step becomes the thickness F shown by dimension lines. Namely, fig. 5 illustrates the state in which both the thickness side surfaces of the part corresponding to the anti-elastic portion 12 in the forming step are cut respectively in the cutting step only by the predetermined thickness or by about 0.5 mm on each surface (about 1.0 mm in total). In the cutting step, one of the thickness side surfaces of the anti-elastic portion 12 or the upper surface of Fig. 5 has only the protruded portions of the give widths A, B and C cut by the aforementioned given thickness so that the protruded portions become the first to the third reinforcing parts 21, 22, 23. In addition, the dents formed between the protruded portions of the predetermined widths A, B, C may be cut by a predetermined thickness in the cutting step in the same way. Alternatively, the dents may not be cut and remained as the first and the second dents 24 between the first to the third reinforcing parts 21, 22, 23 as they are.

The predetermined widths A, B and C of the first to the third reinforcing parts 21, 22 and 23 may be set as desired depending on the mechanical strength that the clutch facing 10 requires.

The radial groove 13 is formed on the exposed surface side of the clutch facing 10 so as to extend radially toward the center of the clutch hub 1 or the clutch shaft exposed surface, as shown in Fig. 3B.

Contact surfaces 14 of the clutch facing 10 get in contact with a facing rotator or a pressure plate not shown. The contact surfaces are divided into two in a radial direction of the clutch facing 10 by an oval groove 15. The radial groove 13And the oval groove 15 on the contact surfaces 14 of the clutch facing 10 are formed mainly for the purpose of cooling in consideration of a circulation efficiency.

The exposed surface side of the clutch facing 10 shown in Fig. 3B adopts a conventional structure in practicing the invention. Still, there is no problem even if a new structure is adopted therefor.

The radial groove 13 extending formed in the radial direction and the oval groove 15 of the clutch facing 10 are formed in the forming step.

The cutting step (machining or scraping step) cuts out or scrapes out the opposite thickness side surfaces, namely, the mounting surface (see Fig. 4A) and the exposed surface (see Fig. 4B) onto the shape of the clutch facing 10 at the time of pressure-forming that is formed into the predetermined thickness in the forming step, thereby making it a friction material that was ground into a predetermined thickness. Specifically, the clutch facing 10 is formed into a ring plate shape of a thickness of 4 mm, an outside diameter of 210 mm and an inside diameter of 140 mm.

As described above, the cut portion 11 has the anti-elastic portion 12 having the anti-elastic structure formed into the thickness E in the forming step except the protruded portions or the parts corresponding to the first to the third reinforcing parts 21, 22 and 23, as shown in the cross-sectional view of Fig. 5. The thickness of the protruded portion after the forming step becomes the thickness shown by the solid line in Fig. 5. The anti-elastic portion 12 has the first reinforcing part 21 of the predetermined width A extending along the outer circumferential edge, the second reinforcing part 22 of the predetermined width B extending along the inner circumferential edge and one or more of the third reinforcing parts 23 of the predetermined width C extending in the circumferential direction between the first and the second reinforcing parts 21 and 22. The anti-elastic portion 12 is formed between the adjacent cut portions (flat smooth surface) 11. Since the cut portion 11 extends in the tangential direction of the clutch hub 1, a length of the first reinforcing part 21 is the longest, a length of the second reinforcing part 22 is the shortest and a length of the third reinforcing part 23 becomes a middle length of the lengths of the first and the second reinforcing parts 21 and 22. Accordingly, a length of the first dent 24 located at an outside in the radial direction is longer than a length of the second dent 24 located at an inside in the radial direction. The thicknesses of the first, the second and the third reinforcing parts 21, 22 and 23 is made as thick as the thickness F of the flat smooth surface that is obtained by cutting the cut portion 11 in the cutting step. In addition, the portions except the first, the second and the third reinforcing parts 21, 22 and 23 of the predetermined widths A, B and C or the thickness E of the first and the second dents 24 as the other parts of the anti-elastic portion 12 of the clutch facing 10 is made thinner than the thickness F of the first, the second and the third reinforcing part 21, 22 and 23 of the predetermined widths A, B and C.

Specifically, in a working example of the present embodiment, the clutch facing 10 (hardened ring plate) made in the forming step and before the cutting step had the opposite thickness side surfaces cut in the cutting step. Then, the flat surfaces of the clutch facing 10 as an end product could be formed with a cutting amount of 1 mm or less in the thickness in sum total of the opposite surfaces from the thickness of 5 mm of the hardened ring plate. That is, the flat surfaces of a required quality could be obtained on both the thickness side surfaces of the clutch facing 10 as the end product, while the end product having a total thickness F = 4 mm or more by the cutting of about 0.5 mm for each of the opposite thickness side surfaces.

The present embodiment was explained with the example in which one reinforcing part or the third reinforcing part 23 is provided at the middle position between the first reinforcing part 21 and the second reinforcing part 22. However, there may be provided a plurality of intermediate or middle reinforcing parts. Moreover, there may be provided a coupling part of substantially a convex shape in cross section so as to extend in the radial direction and to couple or join the first to the third reinforcing parts 21, 22 and 23.

In fact, when a thickness of a hardened ring plate as a base of a clutch facing formed in a forming step in a conventional example is set at 5 mm, the hardened ring plate has opposite thickness side surfaces cut each by about 0.8 mm so as to obtain a clutch facing of a thickness F = 3.5 mm or less. In case the conventional clutch facing as the final product has the thickness F = 3.4 mm, the thickness of the clutch facing as the final product according to the present embodiment is calculated as about 4 mm or more as described above. Thus, it is possible to reduce a quantity in cutting to a large degree. That is, a processing of the conventional clutch facing requires to cut each surface up to 0.8 mm. In contrast, it is enough for a processing of the clutch facing according to the present embodiment to cut each surface only by 0.5 mm. Therefore, if comparing the present embodiment with the prior art in terms of a cutting amount ratio, a labor or work for the processing to obtain the clutch facing decreases at a ratio of 0.5 mm (the present embodiment) to 0.8 mm (conventional art). That is, it means a decrease by 0.5 / 0.8 = 5/8. Moreover, waste of production materials can be calculated as a value multiplying a decrease ratio of the processing work or labor due to the aforementioned cutting amount ratio by a cutting area ratio. Thus, the cutting area of the present embodiment decreases by an area where the first and the second dents 24 are provided on the anti-elastic portion 12 of the clutch facing 10. Consequently, the cutting area according to the present embodiment becomes about 1 / 3 to the conventional art that cuts an entire surface without such dents. Therefore, the waste of the production materials according to the present embodiment becomes 5 / 8 multiplied by 1/3 ≒ 1 / 5 in comparison with the conventional art. In addition, a cutting speed according to the present embodiment can be reduced to about one half or more of a cutting speed of the conventional art, since the cutting amount and the cutting area largely decrease in comparison with the conventional art as mentioned above.

As a result, the cutting work according to the present embodiment is finished within a time period of about one half or less of the prior art. Moreover, as described above, the waste of the production materials can be also reduced to about 1 / 5 of the conventional art. Especially, in practicing the invention, the cutting amount can be reduced by precision in finishing in the forming step.

Since the anti-elastic portion 12 having the anti-elastic structure is formed into the thickness E in the forming step, the thickness thereof becomes thin. However, the first and the second reinforcing parts 21 and 22 of the predetermined width A and the predetermined width B are provided respectively at the outer circumferential edge and the inner circumferential edge. Moreover, one or more of the third reinforcing part 23 of the predetermined width C is provided at the middle position therebetween. Thereby, the clutch facing 10 is given a structure that can be hardly bent in a planar direction. Thus, the clutch facing according to the present embodiment can maintain a strength higher than a mechanical strength of the conventional clutch facing.

Particularly, the first to the third reinforcing parts 21 to 23 having the convex shaped cross section are formed to respectively extend in the circumferential direction that is concentric with the clutch facing 10. Therefore, the anti-elastic portion 12 is given the structure that is difficult to be bent in the plane direction.

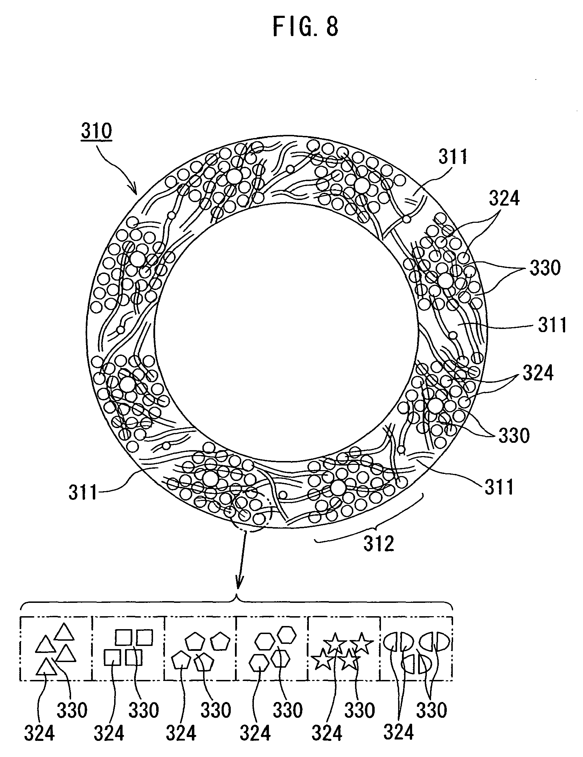

The first embodiment of the anti-elastic portion 12 is structured so as to arrange the first reinforcing part 21 of the predetermined width A from the outer periphery to the inside, the second reinforcing part 22 of the predetermined width B from the inner periphery to the outside and one or more of the third reinforcing part 23 at the middle of them so as to extend in the circumferential direction. Still, the anti-elastic portion 12 may be formed into other simple or complicated structure. Fig. 6 and Fig. 8 show an example thereof.

### SECOND EMBODIMENT

Fig. 6 is a plan view showing a configuration of the clutch facing after a cutting step according to a second embodiment of the invention, while seen from a mounting surface side.

In Fig. 6, as in the case of the anti-elastic structure of the first embodiment, an anti-elastic structure of a clutch facing 110 has a first reinforcing part 121 having a predetermined width A from an outer circumferential edge to an inside and a second reinforcing portion 22 having a predetermined width B from an inner circumferential edge to an outside in the second embodiment. In contrast, the second embodiment of the anti-elastic structure has one or more third reinforcing parts 125, 126, 127 and 128 of a predetermined width G arranged between the first reinforcing part 121 and the second reinforcing part 122 and between adjacent cut portions 111 as flat smooth surfaces, respectively. The third reinforcing parts 125 to 128 extend to diagonal directions of a dent 124 and directions parallel thereto. The thicknesses of the first, the second and the third reinforcing parts 121, 122, 125 to 128 are set at the same as a thickness of the cut portion 111 as the flat smooth surface. T A portion except the first, the second and the third reinforcing parts 121, 122, 125 to 128 or the dent 124 as another portion of the anti-elastic portion 112 of the clutch facing 110 is formed thin and in the aforementioned thickness E. As in the case of the first embodiment, the anti-elastic structure having the first, the second and the third reinforcing parts 121, 122, 125 to 128 is formed between the cut portions 111 extending in a tangential direction of the clutch hub 1. Thus, the anti-elastic structure has a plan shape or a deformed sector shape, as a whole, similar to the first embodiment of the anti-elastic portion 12. Therefore, as in the case of the first embodiment, it is possible to cut or scrape out a surface of the clutch facing 110 at the same time, so that the machining work becomes efficient and it is easy to make the surface flat.

Particular, the second embodiment of the clutch facing 110 provides one or more of the third reinforcing parts 125, 126, 127 and 128 in addition to the first reinforcing part 121 and the second reinforcing part 122. As described above, the first reinforcing part 121 has the predetermined width A from the outer periphery to the inside. The second reinforcing part 122 has the predetermined width B from the inner periphery to the outside. The third reinforcing parts 125, 126, 127 and 128 have the predetermined width G and extend in the diagonal directions between the flat surfaces (cut portions 111). Moreover, a thickness F of the first, the second and the third reinforcing parts 121, 122, 125 to 128 are set as thick as a thickness F of the flat surface or the cut portion 111. On the other hand, the other portion 124 of the anti-elastic portion 10 except the first, the second and the third reinforcing parts is made thinner. Thereby, the clutch facing 110 according to the second embodiment is able to raise a mechanical strength thereof in an elasticity direction and to reduce a quantity of elastic change of the anti-elastic portion 112. The number of the third reinforcing part 125, 126, 127, 128 of the predetermined width G extending in the diagonal directions may be selected as desired as long as it is not less than one.

### THIRD EMBODIMENT

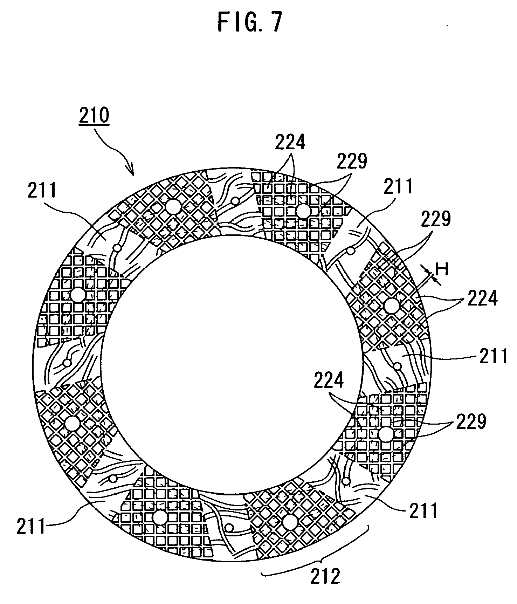

Fig. 7 is a plan view showing a configuration of the clutch facing after a cutting step according to a third embodiment of the invention, while seen from a mounting surface side.

Referring to Fig. 7, in the third embodiment, an anti-elastic structure of a clutch facing 210 has an anti-elastic structure constituted by a reinforcing part 229 that is a netted or mesh surface made by arranging protrusions of a fixed width H in a lattice structure. A thickness of the protrusions of the fixed width H of the reinforcing part 229 as the netted surface is made as thick as a thickness of a cut portion 211 as a flat smooth surface. The anti-elastic structure has another portion 224 of the anti-elastic portion 212 of the clutch facing 210 thinner except the protruded portions of the fixed width H of the reinforcing part 229. The other portion 224 is a dent having a rectangular plan shape formed within the protrusions of the lattice shape. The anti-elastic structure having the reinforcing part 129is formed between the cut portions 211 that extend in a tangential direction of the clutch hub 1 as in the first embodiment. Consequently, the reinforcing structure has a plan shape or a deformed sector shape similar to the first embodiment of the anti-elastic portion 12. Accordingly, as in the case of the first embodiment, it is possible to cut or machine out or scrape out a surface of the clutch facing 210 at the same time. As a result, its processing or machining is efficient and it is easy to make the surface flat.

Particular, in the third embodiment, the reinforcing part 229 of the clutch facing 210 is composed of the netted surface made of the protrusions of the fixed width H. Then, the thickness of the reinforcing part 229 is made the same as the cut portion 211 as the flat smooth surface. Moreover, the dent 224 is made thinner as the other part of the anti-elastic portion 212 of the clutch facing 210 except the part of the fixed width H of the reinforcing part 229. Therefore, the third embodiment of the clutch facing 210 can raise a mechanical strength thereof in an elasticity direction and to reduce a quantity of an elastic change of the anti-elastic portion 212. At this time, a density of the protrusions of the netted surface of the reinforcing part 229 or an area of the dent 224 between the protrusions may be set as desired or at random.

### FOURTH EMBODIMENT

Fig. 8 is plan view showing a configuration of the clutch facing after a cutting step according to a fourth embodiment of the invention, while seen from a mounting surface side.

Referring to Fig. 8, in the fourth embodiment, an anti-elastic structure of a clutch facing 310 has a plurality of dents 324 closely arranged to each other. Each of the dents 324 has a curved shape such as a circle, a semicircle or an ellipse of a fixed area or a polygon such as a triangle, a quadrangle or a starburst shape. Then, a reinforcing part 330 is made by a protruded part having a shape corresponding to an outline of the dent 324 that is formed at a location other than the dents 324. The clutch facing 310 has a thickness of the reinforcing part 330 made the same as a thickness of the cut portion 311 as a flat smooth surface. Moreover, the clutch facing 310 has the other part or the dent part 324 of the anti-elastic portion 312 of the clutch facing 310 except the reinforcing part 330 formed thinner. As in the case of the first embodiment, the anti-elastic structure having the reinforcing part 330 is formed between the cut portions 311 that extend in a tangential direction of the clutch hub 1. Thus, the anti-elastic structure has a plan shape or a deformed sector shape as a whole that is similar to the anti-elastic portion 12 of the first embodiment. Consequently, as in the case of the first embodiment, it is possible to cut or scrape out a surface of the clutch facing 310 at the same time. As a result, its processing or machining becomes efficient and it is easy to make the surface flat.

Particularly, in the fourth embodiment, the reinforcing part 330 is arranged on the clutch facing 310 by a surface that gathers or collects closely the protrusions of the curved shape or the polygon shape of the fixed area or the dents 324. Moreover, the thickness of the reinforcing portion 330 is made as thick as the cut portion 311 as the flat smooth surface. On the other hand, the clutch facing 310 makes thinner the other part of the anti-elastic portion 312 or the dent part 324 except the reinforcing part 330. Accordingly, the fourth embodiment of the clutch facing 310 can enlarge a mechanical strength thereof in an elasticity direction and reduce an amount of an elasticity change of the anti-elastic portion 312. At this time, a density of the protrusions of the polygon shape or the like or the dents 324 may be set as desired within the netted surface of the reinforcing part 330.

In the above described first embodiment to the fourth embodiment, when a clutch is operated into a coupled state, the cushioning plate 3 is stretched or spread to its maximum degree to be formed into a ring of a board shape. However, the reinforcing parts 21 to 330 of the given widths are provided on the clutch facing 10, 1109, 210, 310 so as to touch the cushioning plate 3. Thus, the clutch facing 10, 110, 210, 310 is capable of preventing its deformation as in the prior art.

Moreover, since the anti-elastic portion 12, 112, 212, 312 of the clutch facing 10, 110, 210, 310 has the dents 24, 124, 224, 324 that have the thickness thinner than the cut portion 11, 111, 211, 311 as the flat smooth surface. Furthermore, the dents 24, 124, 224, 324 occupy a large area as a whole in the anti-elastic portion 12, 112, 212, 312. Therefore, even if a temperature varies or fluctuates depending on stacked positions at the time of a heat treatment for heating the clutch facings in a piled or stacked state under a load, it is possible to eliminate distortion at the time of forming and heating the clutch facing 10, 110, 210, 310. In addition, it is possible to prevent any influence of a distortion generated on the clutch facing 10, 110, 210, 310.

The anti-elastic portion 12, 112, 212, 312 of one of the first embodiment to the fourth embodiment is provided with the protrusions having a cross section of an arc shape or the like that extends concentrically with the clutch facing 10, 110, 210, 310. However, in practicing the invention, the part of protruded cross section constituting the anti-elastic portion may be any straight or curved structure so long as it is a structure that is capable of preventing the clutch facing 10, 110, 210, 310 from being bent in the plane direction. That is, if it has a large mechanical strength, saves troubles of a cutting work speed and lessens a waste of production materials, the anti-elastic portion of the invention may be constituted by any shape of straight or curved protrusions.

Therefore, in the clutch facing according to the invention, the anti-elastic portion 12, 112, 212, 312 may have a thickness by a uniform forming or molding before the cutting our or scraping out into the thickness of the clutch facing 10, 110, 210, 310 that is formed in the forming step. Then, the cut portions 11, 111, 211, 311 may be cut and machined only at a part planarly touched with the cushion plate 3. That is, the protruded parts to be the reinforcing parts 21 to 330 of the anti-elastic portion 12, 112, 212, 312 may not be cut when the cut portions 11, 111, 211, 311 are cut, thereby maintaining the thickness before the cutting or at the time of forming or molding so as to be thicker than the cut portions 11, 111, 211, 311. In this case, a thickness of the anti-elastic portion 12, 112, 212, 312 of the clutch facing 10, 110, 210, 310 as an end-product is thicker than a thickness of the cut portions 11, 111, 211, 311 as the flat smooth surfaces or cut surfaces. For example, the thickness of the anti-elastic portion 12, 112, 212, 312 becomes the thickness as shown by the solid line in Fig. 5, while a thickness of the cut portions 11, 111, 211, 311 becomes the thickness F shown by the dimension line in Fig. 5.

The clutch facing 10, 110, 210, 310 in the above embodiments is applied to the clutch disc 100 composed of the clutch hub 1 that makes axially movable the clutch shaft constituting the clutch disc, the circular disc 2 disposed around the clutch hub 1, the cushion plate 3 disposed around the circular disc 2 so as to give an elasticity between the facing rotator and the pressure plate, and the clutch facing 10, 110, 210, 310 fixed to the cushion plate 3 with the rivets 5. The clutch facing 10, 110, 210, 310 is fixed essentially at a center or an inside central part of the cushion plate 3. Then, the clutch facing 10, 110, 210, 319 makes the part planarly touching with the cushion plate 3 at the time of fixing the cut portions 11, 111, 211, 311 as the flat smooth surfaces. In addition, the clutch facing 10, 110, 210, 310 makes the portions between the cut portions 11, 111, 211, 311 as the flat surfaces the anti-elastic portions 12, 112, 212, 312 that give the anti-elastic structure to reduce curving deformation or bending of the surface of the clutch facing 10, 110, 210, 310 against a force in the elasticity direction applied from the cushion plate 3.

In another aspect, the clutch facing 10, 110, 210, 310 has the cut portions 11, 111, 211, 311 as the flat surfaces at the parts planarly touching the cushion plate 3 when fixed thereto. Then, the parts between the cut portions 11, 111, 211, 311 as the flat surfaces are made into the anti-elastic structure so as to lessen or prevent curving deformation of the surface of the clutch facing 10, 110, 210, 310 against the force in the elasticity direction applied from the cushion plate 3 or lessen or prevent an elastic change or deformation in the elasticity direction applied from the cushion plate 3.

The above embodiments of the clutch facing 10, 110, 210, 310 has the cut portions 11, 111, 211, 311 as the flat surfaces only at the portions planarly touching the cushion plate 3 when fixed thereto, while providing the rivet hole 5A for fixing with the rivets 5 generally at the middle of the cut portions 11, 111, 211, 311. Moreover, the clutch facing 10, 110, 210, 310 has the anti-elastic structure formed between the cut portions 11, 111, 211, 311 as the flat surfaces so as to reduce the elastic change or deformation against the force in the plane direction applied to the clutch facing 10, 110, 210, 310.

That is, the clutch facing 10, 110, 210, 310 can be assembled stably and has stable mechanical strength by cutting out or scraping out the surface contacting with the cushion plate 3. At this time, the clutch facing 10, 110, 210, 310 has only the surface touching the cushion plate 3 made into the flat surfaces to form the cut portions 11, 111, 211, 311. Therefore, the area of the cut portions 11, 111, 211, 311 is reduced. Consequently, it is possible to reduce the amount of waste or disposal of surplus materials to be cut powders or particles by the cutting or scraping out. Moreover, since the portions between the cut portions 11, 111, 211, 311 as the flat surfaces are made into the anti-elastic structures to reduce the change or deformation in the plane direction that may be applied to the clutch facing 10, 110, 210, 310, there is no deterioration generated in characteristics or property by the mechanical strength with the anti-elastic structures.

In addition, the anti-elastic structure of the clutch facing 10 sets or arranges the first reinforcing part 21 of the predetermined width A from the outer periphery to the inside, the second reinforcing part 22 of the predetermined width B from the inner periphery to the outside and one or more of the third reinforcing part 23 of the predetermined width C provided between them so as to extend in the circumferential direction. Moreover, the anti-elastic structure of the clutch facing 10 makes the thickness of the first, the second and the third reinforcing parts 21, 22, and 23 as thick as the cut portions 11 as the flat surfaces or the cut surfaces. Then, the clutch facing 10 makes thin the other portions or the dents 24 of the anti-elastic portion 12 except the first, the second and the third reinforcing parts 21, 22 and 23. Therefore, the clutch facing 10 can have its surfaces cut at the same time. Consequently, the cutting work of the surface of he clutch facing 10 becomes efficient, while it is easy to make the surface flat. In particular, the anti-elastic structure of the clutch facing has the first reinforcing part 21 of the predetermined width A from the outer periphery to the inside, the second reinforcing part 22 of the predetermined width B from the inner periphery to the outside and one or more of the third reinforcing part 23 of the predetermined width C provided between them so as to extend in the circumferential direction. Thus, the anti-elastic structures can increase the mechanical strength of the clutch facing 10 against the force or stress in the plane direction given from the cushion plate 3 so as to lessen the amount of elastic deformation of the clutch facing 10.

Alternatively, the anti-elastic structure of the clutch facing 110 sets or arranges the first reinforcing part 121 disposed at the outer peripheral side, the second reinforcing part 122 disposed at the inner peripheral side and one or more of the third reinforcing parts 125, 126, 127, 128 of the predetermined width disposed between the cut portions 111 as the flat surfaces so as to extend in the diagonal directions. In this case, the anti-elastic structure of the clutch facing 110 makes the thickness of the first, the second and the third reinforcing parts 121, 122, 125 to 128 the same as the thickness of the cut portions 111 as the flat surfaces. Then, the clutch facing 110 makes thin the other part of the anti-elastic portion 112 except the first, the second and the third reinforcing parts 121, 122, 125 to 128. Therefore, the clutch facing 10 can have the surfaces cut or scraped out at the same time, so that the cutting work of the surfaces of the clutch facing 110 is efficient, while it is easy to make the surfaces flat. In particular, the anti-elastic structures can heighten the mechanical strength against for the force or stress in the elasticity direction given from the cushion plate 3 so as to reduce the amount of the elastic change in the plane direction of the clutch facing 110.

The anti-elastic structure of the clutch facing 10, 110, 210, 310 is not restricted to only the preferred embodiments described above. It may be any structure as long as it can enlarge the mechanical strength against the force or stress in the plane direction given from the cushion plate 3 and lessen the amount of the elastic change or deformation.

Therefore, each of the above embodiments are illustrative and not restrictive. The scope of the invention being indicated in the appended claim and all variations which come within the meaning of the claims are intended to be embraced therein.

A clutch facing 10 has cut portions 11 or flat smooth surfaces at locations that get in planar contact with a cushion plate 3 when fixed thereto. An anti-elastic portion 12 is provided between the flat smooth surfaces so as to lessen an elastic deformation in an elasticity direction that may be given from the cushion plate 3. The anti-elastic portion 12 has a reinforcing part 21 of a given width from an outer circumferential edge to an inside, a reinforcing part 22 of a given width from an inner circumferential edge to an outside and one or more reinforcing part 23 of a given width provided between them so as to extend in a circumferential direction. The clutch facing 10 makes a thickness of the reinforcing parts the same as the flat smooth surfaces, while making the other portion thinner except the reinforcing parts 21 to 23.

## Claims

1. A clutch facing of a flat ring plate shape fixed to a cushion plate of a clutch disc, **characterized by** comprising:
a plurality of flat smooth surfaces formed on a portion provided on one surface in a thickness direction of the clutch facing (10, 110, 210, 310), the flat smooth surfaces getting in planar contact with the cushion plate (3) when the clutch facing (10, 110, 210, 310) is fixed to the cushion plate (3); and
an anti-elastic structure provided between adjacent ones of the flat smooth surfaces, so as to lessen a curving deformation of the clutch facing (10, 110, 210, 310) against a force in an elasticity direction given from the cushion plate (3).

2. A clutch facing according to claim 1, in which the anti-elastic structure includes:
a first reinforcing part (21) provided from an outer circumferential edge toward an inside of the clutch facing (10) into a predetermined width (A) so as to extend in a circumferential direction of the clutch facing (10);
a second reinforcing part (22) provided from an inner circumferential edge toward an outside of the clutch facing (10) into a predetermined width (B) so as to extend in the circumferential direction of the clutch facing (10); and
one or more third reinforcing part (23) of a predetermined width (C) provided at a middle between the first reinforcing part (21) and the second reinforcing part (22) so as to extend in the circumferential direction of the clutch facing (10);
wherein a thickness of the first reinforcing part (21), a thickness of the second reinforcing part (22) and a thickness of the third reinforcing part (23) are made into a same thickness as the flat smooth surfaces, while a thickness of a portion except the first reinforcing part (21), the second reinforcing part (22) and the third reinforcing part (23) is made thinner than the thickness of the first reinforcing part (21), the second reinforcing part (22) and the third reinforcing part (23).

3. A clutch facing according to claim 1, in which the anti-elastic structure includes:
a first reinforcing part (121) provided from an outer circumferential edge toward an inside of the clutch facing (110) into a predetermined width so as to extend in a circumferential direction of the clutch facing (110);
a second reinforcing part (122) provided from an inner circumferential edge toward an outside of the clutch facing (110) into a predetermined width so as to extend in the circumferential direction of the clutch facing (110); and
one or more third reinforcing part (124, 125, 126, 127, 128) of a predetermined width (G) provided at a middle between the first reinforcing part (121) and the second reinforcing part (122) so as to extend in a diagonal direction of the clutch facing (110);
wherein a thickness of the first reinforcing part (121), a thickness of the second reinforcing part (122) and a thickness of the third reinforcing part (124 to 128) are made into a same thickness as the flat smooth surfaces, while a thickness of a portion except the first reinforcing part (121), the second reinforcing part (122) and the third reinforcing part (124, 125, 126, 127, 128) is made thinner than the thickness of the first reinforcing part (121), the second reinforcing part (122) and the third reinforcing part (124, 125, 126, 127, 128).

4. A clutch facing according to claim 1, in which the anti-elastic structure is composed of a protruded part (21, 22, 23, 121, 122, 124, 125, 126, 127, 128, 229, 330) formed between a plurality of dents (24, 124, 224, 324) disposed on the anti-elastic structure, and a thickness of the protruded part (21, 22, 23, 121, 122, 124, 125, 126, 127, 128, 229, 330) is made a same thickness as a thickness of the flat smooth surfaces, while the dents (24, 124, 224, 324) being formed thinner than the protruded part (21, 22, 23, 121, 122, 124, 125, 126, 127, 128, 229, 330).

5. A clutch facing according to claim 1, in which the anti-elastic structure includes a reinforcing part (229) composed of a mesh surface with protrusions of a fixed width formed into a lattice shape, the reinforcing part (229) has dents (224) of a rectangular plan shape between the protrusions, and the reinforcing part (229) makes a thickness of the protrusions a same thickness as the flat smooth surfaces, while making a thickness of the dents (224) thinner than the protrusions.

6. A clutch facing according to claim 1, in which the anti-elastic structure is composed of a protruded part (330) formed between a plurality of dents (324) disposed on the anti-elastic structure, the dent (324) having a curved shape or a polygonal shape so that the protruded part (330) has a plan shape corresponding to an outline of the dent (324), and a thickness of the protruded part (330) is made a same thickness as a thickness of the flat smooth surfaces, while the dents (324) being formed thinner than the protruded part (330).

7. A clutch facing according to claim 1, in which the flat smooth surface of the clutch facing (10, 110, 210, 310) is composed of a plurality of cut portions (11, 111, 211, 311) that are respectively formed by cutting entirely from the outer circumferential edge to the inner circumferential edge of the clutch facing (10, 110, 210, 310) so as to extend in a tangential direction of a clutch shaft or a clutch hub (1) attached to the clutch shaft so as to move in an axial direction when the clutch disc is assembled to the clutch shaft.

8. A clutch facing according to claim 7, in which the anti-elastic structure is composed of an anti-elastic portion (12, 112, 212, 312) formed between facing edges of adjacent ones of the cut portions (11, 111, 211, 311), and the anti-elastic portion (12, 112, 212, 312) has a plan shape of a deformed sector corresponding to a plan shape of the cut portion (11, 111, 211, 311).

9. A clutch facing according to claim 8, in which the anti-elastic portion (11, 111, 211, 311) is made by disposing dents (24, 124, 224, 324) between protruded portions (21, 22, 23, 121, 122, 124, 125, 126, 127, 128, 229, 330).

10. A clutch facing according to claim 9, in which the protruded portions (21, 22, 23, 121, 122, 124, 125, 126, 127, 128, 229, 330) of then anti-elastic portion (12, 112, 212, 312) are cut simultaneously at a time of cutting the cut portions (11, 111, 211, 311) so as to be a same thickness as the cut portions (11, 111, 211, 311).

11. A clutch facing according to claim 9, in which the protruded portions (21, 22, 23, 121, 122, 124, 125, 126, 127, 128, 229, 330) of the anti-elastic portion (12, 112, 212, 312) keep a thickness before cutting without being cut at a time of cutting the cut portions (11, 111, 211, 311) so as to be a thickness larger than the cut portions (11, 111, 211, 311).

12. A clutch facing according to claim 8, in which the anti-elastic portion (12, 112) has a plurality of protruded portions (21, 22, 23, 121, 122) extending in the circumferential direction of the clutch facing (10, 110) between the cut portions (11, 111) so as to arrange dents (24, 124) between the protruded portions (21, 22, 23, 121, 122).
